(19) **Europäisches Patentamt**

**European Patent Office**

**Office européen des brevets**

(11) **EP 0 960 806 A1**

(12) **EUROPEAN PATENT APPLICATION**

(43) Date of publication:
**01.12.1999 Bulletin 1999/48**

(51) Int. Cl.[6]: **B62K 19/04**, B62K 19/12

(21) Application number: **98308604.2**

(22) Date of filing: **21.10.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **29.05.1998 RU 98109909**

(71) Applicant:
**Vela International Limited**
**London NW3 4HD (GB)**

(72) Inventor:
**Rudoy, Igor Georgievich**
**Moscow 111578 (RU)**

Remarks:
Amended claims in accordance with Rule 86 (2) EPC.

(54) **Bicycle frame**

(57) Increasing the reliability and decreasing the weight of a bicycle frame or support and construction members but also increasing its dynamic characteristics by constructing a bicycle frame or support and construction members by welding extruded tubes and/or profiles which are made from a deformed magnesium-based alloy; the composition of the deformed magnesium-based alloy includes at least one element from the following group: aluminium, manganese, zinc, and the aluminium content of the alloy must be less than, or equal to 5%; the tubes and/or profiles are treated by stress and/or heat and/or chemical treatment; the welded bicycle frame or support and construction members or their parts are then additionally treated by stress and/or heat and/or chemical treatment.

Fig.2b

**EP 0 960 806 A1**

## Description

This invention generally relates to alloy support and construction members, but more specifically to bicycle frames and their parts, especially when constructed from magnesium-based alloys.

It is well known that bicycle frames can be manufactured by soldering steel tubes together with steel assemblies to form the required structure. For a full exposition of this technique see V.P. Lubovitsky's "Racing bicycles", Leningrad, Mashinostroenie, 1989 and C. Smolik's "Fahrrad-Rahmenbau: Material-Geometrie-Fertigung", Kiel, 1997.

There are many manufacturing companies who produce these kinds of frames by using a wide range of different steels, including highly alloyed steels.

The tubes can be extruded as a single unit or constructed from steel strips which are rolled in on themselves and welded along their length to form a tube, The assemblies can be cast as well as punched.

These kind of frames benefit from their simplicity and from the extensive experience there is in this method of manufacturing. Additionally, there is the possibility of improving the strength of the most loaded parts of the frame by simply increasing the thickness of the walls of the assemblies and/or tubes.

The problems associated with these well known frames include: their substantial weight, as a rule up to 3.5 kg (in more expensive frames, tubes with variable thickness of the walls are used to decrease the weight); the high demands of accuracy required for conjugating the tubes and the holes in the assembly; the environmentally unhealthy process of soldering. Any changes in the geometry of the frame requires the development and production of new assemblies tools and equipment which makes the manufacturing process of experimental samples or small batches of frames more complicated and more expensive. In addition, the manufacturing of analogous frames from light weight metals or alloys is more difficult because of the complexity of soldering light weight metals or alloys, particularly magnesium, and the high temperature of soldering, which for light weight metals (especially magnesium) is very close to the melting temperature. Thus, the mechanical characteristics of the tubes and assemblies and the frame's geometry are effected; during heating up to high temperatures under the influence of inside tensions the tube can bend and straightness may be lost.

However, there still remains a high interest to manufacture bicycle frames from lighter alloys since they allow a decrease in weight while keeping or even increasing, the rigidity of the construction. This is possible because the rigidity of the main construction element of the frame, the tube, depends on the first exponent of the thickness and the third exponent of the diameter when the thickness of the wall, $\delta$, which is much less than the diameter of the tube $D$, ($\delta << D$, as in existing tubes) But the weight of the tube depends on the first exponent of the thickness of the wall and of the diameter. Because the linear weight of the tube is proportional to $\rho \delta D$ ($\rho$ is the density of the material), but the rigidity is proportional to $ED^3\delta$ ($E$ is the Young's modulus of the material), then the ratio of the tube's rigidity produced from material "1" and "2" is as follows:

$$\frac{E_1 D_1^3 \delta_1}{E_2 D_2^3 \delta_2} = \frac{(E_1/\rho_1)}{(E_2/\rho_2)} \cdot \frac{\rho_1 D_1 \delta_1}{\rho_2 D_2 \delta_2} \cdot \frac{D_1^2}{D_2^2}$$

For the overwhelming majority of alloys (except composite materials and Beryllium alloys) the specific rigidity $E/\rho$ is practically constant (see Arzamasov B.N., "Construction Materials", Handbook, Moscow, Mashinostraenie 1990, page 322). In this way, for two tubes with the same specific weight, the ratio of the rigidities is roughly proportional to the second exponent of the diameters. The use of large diameter, lightweight alloy tubes in the manufacture of bicycle frames permits a decrease in the weight of the frame while keeping the high rigidity, or an increase in the rigidity without an increase in weight.

The simple ratios that were given above are accurate for simple tubes with a round shape. For profiles (tubes with oval or more complicated shapes), or tubes with strengthening ribs (which also can be used for manufacturing bicycle frames as demonstrated by COLUMBUS of Milan, Italy) the equation for rigidity becomes more complicated, however the main conclusion is that the use of more lightweight alloys is reasonable.

It is important to note that the rigidity of steel tubes also rises with increasing diameter, and an according decrease in tube thickness. However, there are real technological and constructional limits for decreasing the thickness of the wall of the tube. In modem steel frames with variable thickness tubes, the thickness of the wall of the tube in the central section, with diameter up to 35mm, is not more than 0.5mm. In tubes with diameter more than 50mm, to keep weight down, the thickness of the wall must be reduced down to 0.35mm, which is very close to the thickness of the wall of a beer can. This kind of tube, with non-axial load, looses its stability and is easily crushed - it is known that the stability of the tube against these kinds of loads increases sharply according to the following ratio $\delta/D$. In this way the use of tubes with thicker walls for manufacturing frames from more lightweight alloys allows an increase in the stability of the frame against non-axial loads and consequently increases its reliability

There are bicycle frames manufactured by welding aluminium based tubes (Smolik *supra*). Using light aluminium alloys, with a density of around 2.8g/cm$^3$ compare with a density of 7.9g/cm$^2$ for high quality steels, in large diameter tubes (or profiles), allows the manufacture of lighter, more reliable and rigid frames. These frames are not restricted to bicycles intended for road use only, but for mountain and other types of bicycles as well (weight up to 2-2.2kg or even up to 1.6-1.8kg by using tubes with variable thickness). The use of a welding process further allows for an easy manufacturing change when changing models of the frames.

However, the indicated weight above is in fact limited by the reliability of the bicycle frames and any further decrease in weight requires a move to more light alloys, in particular magnesium with density of 1.75-1.9g/cm$^3$.

A bicycle frame manufactured from a magnesium-based alloy is discussed in US-A-4921267. This is also briefly described in Smolik (*supra*). Further details can be found in corporation documents Kirk Precision Ltd. Here, the bicycle frame is manufactured by die casting method. The method used in this frame does not allow for the potential benefits of moving to more light alloys because the specific durability characteristics of cast magnesium alloys are as a rule not very high - as a result the weight of the manufactured bicycle frames is nearly 2kg, which is similar to the weight of aluminium frames. In this frame (to get the necessary level of durability) an alloy with a high content of aluminium was used - up to 9%, which brings (see below) a deterioration of the dynamical characteristics of the frame. Die casting also brings difficulties in the manufacture of small batches or experimental samples of bicycle frames.

The present invention seeks to provide an increase in the reliability and a decrease in the weight of a bicycle frame, and also to increase its dynamical characteristics.

According to an aspect of the present invention, this can be achieved if a bicycle frame is manufactured by welding-tubes and/or profiles, wherein the tubes and/or profiles are extrusions or welded strips of deformed magnesium-based alloys.

In another aspect of the present invention, the purpose can be achieved if a bicycle frame, formed from deformed magnesium-based alloy, wherein the elemental composition of the deformed magnesium-based alloy includes at least one element from the following: aluminium, manganese and zinc.

Further, the concentration of aluminium in the magnesium-based alloy is less than or equal to 5%.

The tubes and/or profiles of the frame are stress and/or heat and/or chemical treated.

The manufactured bicycle frame made by welding these tubes and/or profiles are additionally treated by stress and/or heat and/or chemical treatment.

Stress treatment preferably involves treatment by creating elastic and/or plastic deformations (quasi-static impulse or periodic impulse) and includes standard operations for treatment by pressure (rolling, wire drawing, riveting, etc), ultrasound and/or vibration treatment, shot blasting treatment, treatment with pressure by impulsive magnetic fields, etc. Chemical treatment preferably involves the formation, by chemical, electrical or plasma-chemical methods on the surface of the treated product, of a layer with chemical structure which is different from the chemical structure of the alloy, which can also act as a base for the following painting. This layer, which has special characteristics such as to protect against corrosion, increases the longevity of the bicycle frame, and also increases the fatigue limit (for example the number of cycles under constant cyclic loading the frame withstands before destruction).

In the particular case of stress treatment, the extruded tubes and/or profiles are deformed into the required shape during the treatment, for example transformed from round section tubes into oval tubes. In many cases this method is preferable compared to the direct pressing of the tubes into the oval form. This type of punching treatment can also be used to produce tubes and/or profiles in which the cross-section changes along the tube and/or profile. The deformation of magnesium-based alloy in many cases has to be done with high temperature so in many cases the combination of stress and heat treatment must be used. Analogous treatment can be used to change the thickness of the wall of the tubes and/or hollow profiles.

Some of the particular chemical treatments produce an anti-corrosion cover and can be applied only on some of the pans of the surface elements from which the frame will be welded. For example, it could be applied only on the surface. or parts of the surface, of the rear dropouts since the dropouts are always in contact with the steel elements of the rear wheel axle. Here the chemical treatment could be applied before, or after the welding the frame.

It is important that the main constructional elements of the welded bicycle frame must be manufactured from tubes and/or profiles extruded from a deformed magnesium-based alloy. These include the tubes of the triangle of the frame (down tube, head tube, top tube, seat tube and bottom bracket) and stays (chain and seat). The additional elements of the frame could be manufactured by punching, or by die-casting magnesium alloys (bridges. sometimes dropouts) and can be subsequently welded onto the main elements. The other elements. such as nuts, cable guiders and cable stoppers, can be manufactured from alloys based on other different materials and can be fixed for example by riveting.

Manufacturing bicycle frames by welding extruded tubes and/or profiles which are made of deformed magnesium-based alloys, because of the high mechanical characteristics of these tubes, allows the manufacture of light weight and rigid bicycle frames, especially if tubes with variable thickness of the walls are used. The use of tubes and/or profiles manufactured from Mg-Al-Mn-Zn alloys in the construction of bicycle frames increases the fatigue characteristics of the welded joints and therefore the reliability and resources of the frame. Over a wide range of loads, the deformation of the preferred bicycle frame has elastic (reversible) character.

The invention is described in the following examples of manufacturing particular types of bicycle frame. It is important to note that this invention is not limited only by the described examples and it also covers all possible versions and modifications which could be covered by the claims of this invention.

An embodiment of the present invention is described below, by way of example only to illustrate the benefits of this invention, with reference to the accompanying drawings, in which:

Figure 1a shows a graph of the deflection, $\triangle$, of the bottom bracket of the frame against applied loads;

Figure 1b shows the remaining deflection (deformation) of 3 frame types after an applied load of 300kg;

Figure 1c shows the remaining deflection (deformation) of 3 frame types after an applied load of 600kg;

Figure 2a shows a shock absorbency trace of a 2.700kg Cr-Mo bicycle frame; and

Figure 2b shows a shock absorbency trace of a 1.245kg example of the present frame.

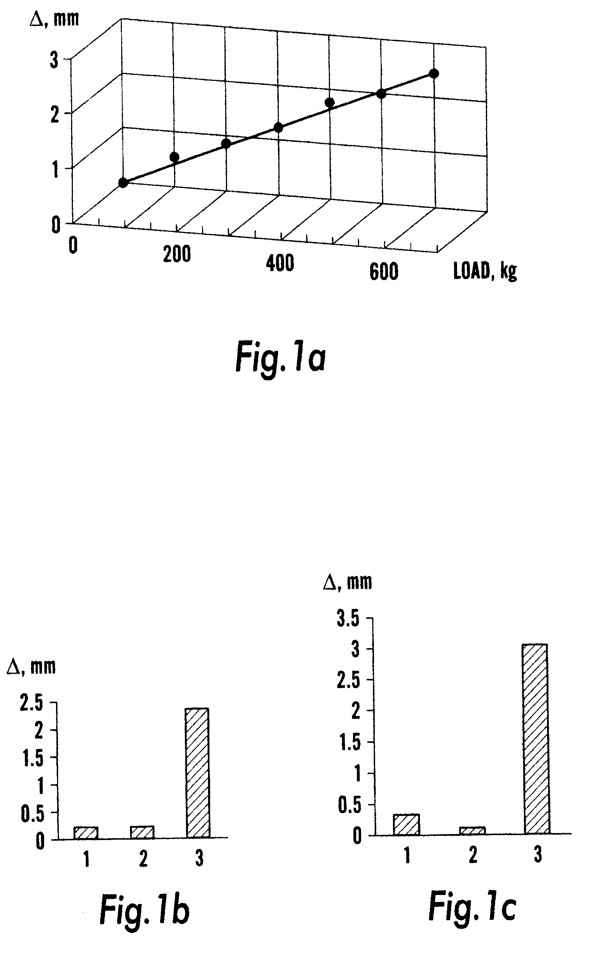

Figure 1a shows the dependence of deformation (deflection of bottom bracket) of the frame, as described in the following example, with weight 1.245kg on its static load according to test DIN 79100-4.3.2. With loads up to 800 kg the deformation is almost linear in proportion to the load, but the remaining deformation is a few times Less than for high quality chrome-molybdenum steel frame with weight 2.7kg.

Figure 1b shows the differing residual deformation after an applied load of 300kg for:

1. A Cr-Mo frame - 2.7kg;
2. A steel frame - 3.2kg
3. Magnesium-based alloy frame - 1.245kg

Figure 1c shows the differing residual deformation after an applied load of 600kg for:

1. A Cr-Mo frame - 2.7kg
2. A steel frame - 3.2kg
3. Magnesium-based alloy frame - 1.245kg

Using alloys with a concentration of aluminium of not more than 5% increases the stability of weld's characteristics, and also increases the dynamical characteristics of the bicycle frame. With the preferred frame, having high static rigidity, the speed of absorption of vibrations and shocks is sharply increased.

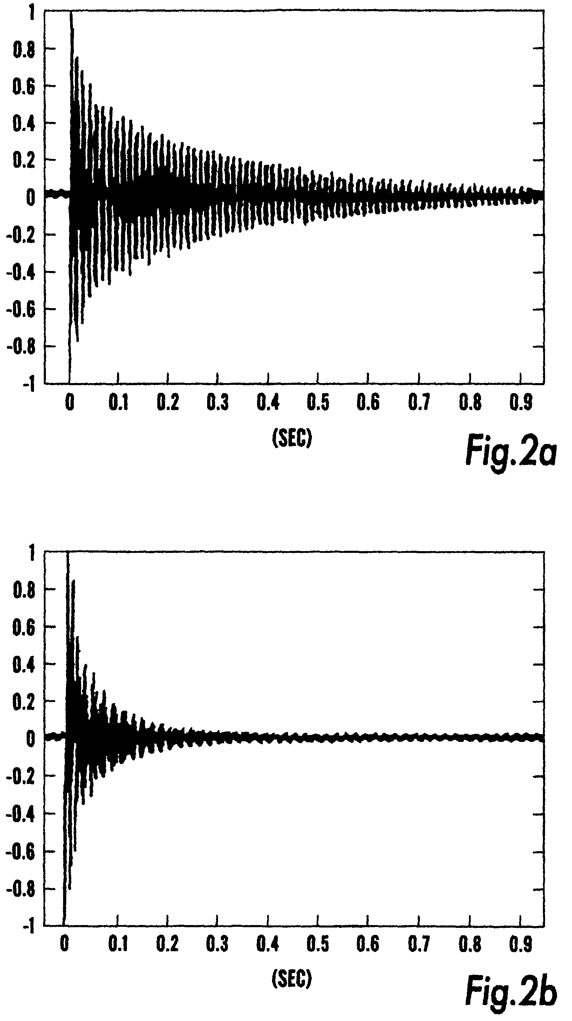

In Figures 2a and 2b we compare the absorption, which was measured by tensile sensors, after an outward impulse influence (impact) was applied to the frame with weight 1.245kg and to a steel frame welded from high quality chrome-molybdenum tubes with weight about 2.700kg Both frames having very close static rigidity, The difference of the speed of absorption is not less than 5-6 times, the alloy used had a concentration of aluminium of about 4.5%. Decreasing of the concentration of aluminium to 3.5-4% increases the damping characteristics in the present bicycle frame. Further processing of the extruded tubes and/or welded frame by stress and/or heat and/or chemical treatment additionally increases the fatigue characteristics of the frame and accordingly increases reliability of the present frame and its longevity.

The manufacture method provides extremely lightweight magnesium-based alloy frames which keep their high rigidity and which show an increase in their dynamic characteristics compared to other frames. Compared to existing welded aluminium bicycle frames the preferred bicycle frame has extremely better dynamical characteristics, has 20-25% less weight and still has the high rigidity and reliability required of a bicycle frame. The preferred bicycle frame is the first frame manufactured by welding extruded parts (tubes and/or profiles) from deformed magnesium-based alloys.

The invention may be best understood by way of the following examples:

A bicycle frame was manufactured for a road bicycle from extruded Mg-Al-Mn-Zn alloy tubes, where the alloy contained about 4.5% aluminium. Hand TIG-welding was used, the filler metal had chemical contents the same as the main material. For the manufacturing of this frame, extruded (hot pressed) tubes were used with a constant cross section as described below (all dimensions are in mm):

Down tube: 41 x 1.7 mm, deformed into oval ≈ 42 x 38 mm;
Top and seat tube: 34 x 2 mm;
Head tube: 40 x 3.1 mm;
Bottom bracket: 42 x 4.2 mm;
Chain stays: 22 x 2 mm, deformed into oval ≈ 24 x 17 mm;
Seat stays and bridges: 19 x 2 mm.

The tubes were manufactured by pressing on presses with loads of 350 and 630 metric tonnes from rods 70 - 110 mm with drawing out 20 - 35. The temperature of pressing was 320 - 370°C, the speed of pressing was 1.5 - 8 m/min. Part of tubes were then dragged and/or rolled at room temperature.

The weight of frame was 1.245kg for a size of 49.53cm, the frame successfully passed all tests according to toughened DIN 79100-4.3, DIN 79100-4.2.2 and ISO 4210-4.6.1, ISO 4210-4.6.2 standards. In particular during tests according to the standard DIN 79100-4.3.2 instead of using a maximum static load of 300kg, a maximum load of 1,000kg was used. During impact load testing according to standard ISO 4210-4.6.1, 4.6.2 the tests were repeated 10 times each, instead of the required 1 and 2 times accordingly. Some of the test results using the described frame and the results of comparing it with a high quality steel frame with weight 2.7kg, are also represented in Figure 1 and 2.

A mountain bicycle frame was also manufactured from a similar alloy. The following tubes were used:

Down tube: tube with variable thickness 58 mm, deformed into oval ≈ 75 x 37 mm, with thickness of the walls 2.5 mm in the section of the welding of down tube with head tube and 1.5 mm in the main section of the tube, the length of transition section 100 - 120 mm;
Top tube: tube with constant thickness 51 x 1.5 mm, deformed into oval ≈ 62 x 37 mm;
Seat tube: 34.8 x 1.9 mm:
Head tube: 42 x 4.2 mm;
Bottom bracket: 42 x 4.2 mm;
Chain stay: 25 x 1.9 mm, deformed into oval ≈ 29 x 17 mm;
Seat stay: 22 x 2 mm, deformed into oval ≈ 24 x 17 mm;
Bridges: 19 x 2 mm.

The weight of the frame became 1.29kg with a height of 48.26cm, almost without plastic deformations the frame successfully finished static loading according to standard DIN 79100-4.3.2 up to 1,700 kg. During the fatigue tests according to the extremely difficult standard CANNONDALE 4.41.3, the frame sustained over 85,000 cycles without destruction. After shot blasting treatment the welded frame was kept for 30 minutes in a temperature of 170 - 200°C and the number of cycles was increased to 115,000 - 125,000 cycles before destruction.

Additionally the fatigue durability of the frames was tested on a vibration stand under the following test conditions. A very durable forged fork was fixed in the head tube of the frame. The complete fork-frame assembly was secured (the fork was fixed to a joint and the rear suspension was fixed securely) to the bars of the vibration stand, which imitate the bicycle wheel axles. The bars oscillated with amplitude 8.5 mm (the distance between the end stops was 17 mm) and with frequency 7.5 - 8 Hz. The displacement of the oscillation phase between the front and rear bars was 5 mm (when one bar is in a neutral position the other bar is lifted up or pushed down by 5 mm). The total static load on the frame was 95 kg including 25 kg on the head joint and 45 kg on the saddle joint and 25 kg on the bracket joint.

This stand imitates the riding on a rough road.

The frame can be considered reliable if it is not destroyed during a limited number of cycles. The standard steel frame of a road bicycle was destroyed on average after 20,000 -25,000 cycles (tested continuously for 40-50 minutes), but a high quality chrome-molybdenum frame of a mountain bicycle after 100,000 - 140,000 cycles. The mountain bicycle frame which was described above and was manufactured from deformed magnesium-based alloy was destroyed after 250,000 - 300,000 cycles, but after covering it with a protective layer up to 400,000 cycles. The frame welded from preliminary riveted down and top tubes also survived in 400,000 load cycles.

In all these cases of fatigue testing the destruction of the frame never happened suddenly and it had a character of slow growth of a clearly visible crack. With an easily noticeable crack the frame survived tens of thousands of load cycles. This guarantees, together with high absolute fatigue characteristics (large number of load cycles before the destruction of the frame) additional safety during the exploitation of the bicycle frame.

**Claims**

1. A bicycle frame, manufactured by the welding of tubes and/or profiles, formed as extrusions or welded strips of deformed magnesium-based alloy.

2. A bicycle frame as claimed in claim 1, wherein the elemental composition of the deformed magnesium-based alloy includes at least one element from the following: aluminium, manganese, zinc.

3. A bicycle frame as claimed in claim 1 or 2, wherein the concentration of aluminium in the magnesium-based alloy is less than or equal to 5%.

4. A bicycle frame as claimed in claim 1, 2 or 3, wherein the extruded tubes and/or profiles, or parts of the tubes and/or profiles, are stress and/or heat and/or chemical treated before welding.

5. A bicycle frame as claimed in claim 1, 2, 3 or 4, wherein the welded frame, or parts of the welded frame, are stress and/or heat and/or chemically treated.

6. A method of welding light, strong support and construction members from extruded tubes and/or profiles, or welded strips, of deformed magnesium-based alloy.

7. A method as claimed in claim 6, wherein the elemental composition of the deformed magnesium-based alloy includes at least one element from the following: aluminium, manganese and zinc.

8.  A method as claimed in claim 6 or 7, wherein the concentration of aluminium in the magnesium-based alloy is less than or equal to 5%.

9.  A method as claimed in claim 6, 7 or 8, wherein the method includes the steps of stress and/or heat and/or chemically treating the extruded tubes and/or profiles or parts of the tubes and/or profiles before welding.

10. A method as claimed in claim 6, 7, 8, or 9 wherein the method includes the steps of stress and/or heat and/or chemically treating the welded support and construction members or parts of the support and construction member

**Fig. 1a**

**Fig. 1b**

**Fig. 1c**

*Fig.2a*

*Fig.2b*

**European Patent Office**

## EUROPEAN SEARCH REPORT

Application Number

| | DOCUMENTS CONSIDERED TO BE RELEVANT | | EP 98308604.2 |
|---|---|---|---|

| Category | Citation of document with indication, where appropriate, of relevant passages | Relevant to claim | CLASSIFICATION OF THE APPLICATION (Int. Cl. 6) |
|---|---|---|---|
| X | WO 94/04766 A1 (GESENKSCHMIEDE SCHNEIDER GMBH), 03 March 1994 (03.03.94), claims 6,12,14. | 1,4,5,8 | B 62 K 19/04 B 62 K 19/12 |
| X,D | EP 0177646 A1 (KIRK) 16 April 1986 (16.04.86), abstract. | 1,5 | |
| Y,D | | 4,8 | |
| Y | US 5507888 A (DICKSON, JR. et al.) 16 April 1996 (16.04.96), claim 1. | 4,8 | |

TECHNICAL FIELDS SEARCHED (Int. Cl.6)

B 62 K

The present search report has been drawn up for all claims

| Place of search | Date of completion of the search | Examiner |
|---|---|---|
| VIENNA | 12-02-1999 | BAUMGARTNER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

## ANNEX TO THE EUROPEAN SEARCH REPORT
## ON EUROPEAN PATENT APPLICATION NO. EP 98308604.2

This annex lists the patent family members relating to the patent documents cited in the above-mentioned search report.
The members are as contained in the EPIDOS INPADOC file on 18. 2.1999.
The European Patent Office is in no way liable for these particulars which are merely given for the purpose of information.

| Patent document cited in search report | Publication date | Patent family member(s) | Publication date |
|---|---|---|---|
| WO A1 9404766 | 03-03-94 | CZ A3 9500465<br>DE A1 4228238<br>DE C2 4228238<br>EP A1 658232<br>JP T2 8502928<br>US A 5794398 | 14-02-96<br>30-06-94<br>14-08-96<br>21-06-95<br>02-04-96<br>18-08-98 |
| EP A1 177646 | 16-04-86 | DE C0 3480785<br>EP B1 177646 | 25-01-90<br>20-12-89 |
| US A 5507888 | 16-04-96 | US A 5342459 | 30-08-94 |

For more details about this annex see Official Journal of the European Patent Office, No. 12/82.